# EUROPÄISCHE PATENTSCHRIFT

(11) **EP 1 004 340 B1**
(45) Veröffentlichungstag und Bekanntmachung des Hinweises auf die Patenterteilung: **26.02.2003**
(21) Anmeldenummer: 99120368.8
(22) Anmeldetag: 13.10.1999
(51) Int. Cl.: B01D 25/164, B01D 25/34

(54) **Verfahren zum Entleeren von Filterpressen**
Process for emptying of filter presses
Procédé pour la vidage de filtres-presses

(30) Priorität: 03.11.1998 DE 19850602
(43) Veröffentlichungstag der Anmeldung: 31.05.2000
(73) Patentinhaber: Erich Netzsch GmbH & Co. Holding KG, D-95100 Selb (DE)
(72) Erfinder: Fryauf, Vladimir, 26601 Beroun 3 (CZ)

(56) Entgegenhaltungen:
- DE-A- 2 702 612
- DE-A- 3 933 740
- US-A- 4 931 177
- US-A- 5 635 061

## Beschreibung

Die Erfindung bezieht sich auf ein Verfahren zum Entleeren von Filterpressen, die aus mehreren zu einem Filterplattenpaket gehörenden Filterplatten bestehen, wobei die zwischen den Filterplatten während eines Filtriervorgangs entstandenen Filterkuchen während der Eröffnungsphase des Filterplattenpakets in der man die Filterplatten auseinanderzieht, aus den Filterkammem entfernt werden.

Aus der DE 34 90 756 C2 ist eine Filterpresse mit einem Betriebsverfahren bekannt, bei dem die Filterplatten beim Öffnungsvorgang des Filterplattenpakets entlang der Seitenholme gezogen werden, auf denen sie mit ihren Tragarmen aufliegen. Zum Entfernen der Filterkuchen sind Zahnstangen entlang der Seitenholme angeordnet, die soweit angehoben werden, daß die Tragarme über die Zähne gleiten. Durch die mehrfache Hub- und abrupte Senkbewegung wird das Abgleiten der Filterkuchen von der Filterplatte unterstützt. Aufgrund des Gewichts der Filterplatte und des Filterkuchens entsteht jedoch an den Plattenarmen und an den Zahnstangen erhöhter Verschleiß zum zusätzlich gesteigerten Lärmpegel.

Die DE 38 42 867 A1 zeigt und beschreibt eine Filterpresse mit einer Vorrichtung zum Entfernen von Filterkuchen. Bei dieser Filterpresse sind alle Filterplatten untereinander verbunden, so daß sich bei geöffnetem Filterplattenpaket gleichmäßige Abstände zwischen den Filterplatten einstellen. In diesem geöffneten Zustand des Filterplattenpakets läßt sich jede Filterplatte in Schwingung versetzen. Durch diese Schwingungsbewegung schlagen benachbarte Platten gegeneinander, um das Lösen der Filterkuchen zu bewirken. Dabei werden die Platten erhöhter mechanischer Belastung ausgesetzt, die durch den Einsatz einer Rüttelvorrichtung noch verstärkt wird.

Auch aus der EP 0 702 992 A1 ist ein Verfahren und die Anordnung von Filterplatten zum Entfernen von Filterkuchen bekannt. In der dargestellten Ausführung weisen die Filterplatten in Höhe der seitlichen Führungen Drehlager auf, um die die Filterplatten entlang einer horizontal verlaufenden Achse schwenken. Die Schwenkbewegung vollziehen die Filterplatten während des Verschiebens, wobei die bewegte Platte an benachbarten Platten anstößt, um den an der filterwirksamen Plattenoberfläche anhaftenden Filterkuchen zu entfernen. Durch die Berührungen der Filterplatten untereinander kommt es zu Verschleißerscheinungen an den Filterplatten oder den eingesetzten Filtertüchern.

Eine Membranfilterpresse ist aus der US PS 4.931.177 bekannt. Die Membranen werden hier von schmalen leichten Rahmenelementen begrenzt und von Klammern zusammengehalten. Je ein Filtertuch umgibt bei dieser Ausführung Membranen, die zu unterschiedlichen Filtrationskammern gehören. Die zum Öffnen einer von mehreren Filterkammern vorgesehenen Zylindereinheiten sind so angeordnet, daß beim Öffnen des Membranplattenpakets jeweils ein benachbartes Membranenpaar mit einem Filterrahmen geöffnet wird und der Filterkuchen aus der Filterkammer herausfällt. Durch zeitverzögertes Betätigen der Zylindereinheiten wird das Membranplattenpaket schrittweise nacheinander geöffnet und entleert.

Aufgabe der Erfindung ist es, durch eine kontrollierte und vereinfachte Filterplattenbewegung das Ablösen der erzeugten Filterkuchen zu verbessern.

Diese Aufgabe wird erfindungsgemäß durch die Merkmale des Anspruchs 1 gelöst.

In ein Ausführungsbeispiel der Erfindung wird zum Öffnen einer Filterkammer die jeweils nächste Platte vom geschlossenen Filterplattenpaket abgezogen und ganz normal mit gleichmäßiger Geschwindigkeit mit einer linearen Bewegungskomponente bewegt. Je nachdem wie weit der Abstand zwischen dem geschlossenen Filterplattenpaket mit Filterkuchen und dem Teil ohne Filterkuchen ist, werden der momentan transportierten Filterplatte eine oder mehrere nur horizontal gerichtete ruckartige Bewegungskomponente auferlegt.

Abhängig von der Filterkuchenkonsistenz und damit der Haftfähigkeit des Filterkuchens an der Filterplatte bzw. dem Filtertuch werden den Filterplatten ruckartige Bewegungen nur in eine Richtung, in Öffnungsrichtung, der Entleerungsrichtung der Filterpressen, auferlegt. Wie bereits angesprochen, kann es bei stark oder stärker anhaftenden Filterkuchen angebracht sein, die Masseträgheit des Filterkuchens auszunutzen und ruckartige Bewegungen auf die Filterplatte zu übertragen und dies sowohl während einer Bewegungskomponente in Öffnungsrichtung wie auch in Schließrichtung des Filterplattenpakets.

Nachdem es sehr unterschiedliche Zusammensetzungen und Konditionierungsarten für die zu filtrierende Masse gibt, die beim Benutzer der Filterpressen auftreten und die die Haftfähigkeit des Filterkuchens bestimmen, ist die Filterplattenverschiebevorrichtung in vorteilhafter Weise durch entsprechende Programmsteuerungen in der Lage, auch besondere Bewegungsabläufe zu vollziehen. Es hat sich gezeigt, daß je nach Filterkuchenbeschaffenheit ruckartige Bewegungen in periodischer Folge oder in Folge von Intervallen erfolgen können.

In einer Ausführungsmöglichkeit der Erfindung kann beim Öffnen des Filterplattenpakets die gleichmäßige Plattenbewegung von einer zusätzlichen ruckartigen Bewegung überlagert sein. Dies kann erreicht werden durch einen Einsatz in der Verschiebevorrichtung, der die Halteklinken für die Filterplatten, unabhängig von der Transportbewegung der Platte, ermöglicht. Damit wird die Filterplatte einer gleichmäßigen Abzugsbewegung vom Filterplattenpaket unterzogen, wobei die Halteklinken zusätzliche ruckartige Bewegungen auf die Filterplatte ausüben können. Damit kann bei großen Filterpressen bzw. bei Filterpressen mit sehr vielen Filterplatten eine Zeitersparnis eintreten, da die Verschiebevorrichtung stets mit der gleichen Geschwindigkeit bewegt wird und etwaige Rüttelbewegungen, die das Abfallen des Filterkuchens bewirken, dieser Transportbewegung aufgesetzt sind.

Das erfindungsgemäße Verfahren kommt bei Filterpressen der allgemein bekannten Bauart zum Einsatz. Als wesentliche Bauteile weist diese Filterpresse zwei seitliche Ständer auf, die über zwei parallel zueinander angeordnete waagrechte Holme oder Traversen über dem Filterplattenpaket miteinander verbunden sind. Die Filterplatten werden sowohl in hängender Ausführung an der Traverse, wie auch in stehender Ausführung an den seitlichen Holmen von einer Verschiebevorrichtung transportiert.

Im Ausführungsbeispiel sind an beiden Längsseiten der Filterpresse unendliche Ketten oder Seilzüge, die über Kettenräder oder Umlenkrollen umlaufen, mit einem elektrischen oder hydraulischen Antrieb verbunden. Am oberen oder unteren Trum des Antriebsmittels (Kette oder Seilzug) sind Mitnehmer für die Filterplatten befestigt. Diese Mitnehmer greifen jeweils die vorderste Platte vom geschlossenen Filterplattenpaket und ziehen diese in eine Öffnungsstellung. Während des Transports der Filterplatte, weg vom geschlossenen Filterplattenpaket, soll der Filterkuchen von der Filterplatte/Filtertuch entfernt werden. Dazu ist der Antrieb der Verschiebevorrichtung mit einer speziellen Steuerung versehen, die es ermöglicht, der Filterplatte in der Arbeitsöffnung (Stellung der Platte zwischen dem geschlossenen Filterplattenpaket und den entleerten Filterplatten) eine Bewegungskomponente aufzuerlegen, die abweichend von der kontinuierlichen gleichmäßigen Transportbewegung ist. Dazu wird der Schaltimpuls zur Bewegungsumkehr der Verschiebevorrichtung ausgenutzt. Der Schaltimpuls aktiviert ein zusätzliches Programm, bei dem die Verschiebevorrichtung etwa in der Mitte der Arbeitsöffnung eine ruck- oder rüttelartige Bewegungsphase durchläuft, wobei die jeweilige Filterplatte abrupt abgestoppt wird.

In dieser Bewegungsphase im Bereich der Arbeitsöffnung läßt sich die behandelte Filterplatte über das Zusatzprogramm bei Bedarf in gleicher Richtung oder in entgegengesetzter Richtung jeweils abrupt stoppen. Auch die Zeitfolge der Stopbewegungen oder Umkehrbewegung der Verschiebevorrichtung der Filterplatten ist in Abhängigkeit von der Filterkuchenhaftfähigkeit möglich. In besonderen Fällen kann auch eine Sensorüberwachung zur Programmsteuerung der Filterplattenverschiebevorrichtung eingesetzt werden. Dabei wird, sobald das Abfallen des Filterkuchens erkannt wird, auf kontinuierlichen Filterplattentransport umgesteuert, wogegen ohne ein entsprechendes Signal der spezielle Bewegungsablauf der Verschiebevorrichtung zum Lösen des Filterkuchens verlängert oder auf einen vorprogrammierten Bewegungsablauf umgestellt wird.

Der Vorteil dieses erfindungsgemäßen Verfahrens liegt darin, daß außer eines etwas komfortableren Steuerprogramms für die Verschiebevorrichtung kein zusätzlicher mechanischer Aufwand und allem voran keine mechanische Belastung der Filterelemente untereinander entsteht.

## Patentansprüche

1. Verfahren zum Entleeren von Filterpressen, die aus mehreren zu einem Filterplattenpaket gehörenden Filterplatten bestehen, wobei die zwischen den Filterplatten während eines Filtriervorgangs entstandenen Filterkuchen in der Öffnungsphase des Filterplattenpakets, in der die Filterplatten auseinandergezogen werden, aus den Filterkammern entfernt werden,
**dadurch gekennzeichnet,**
**daß** die Filterplatten, während sie vom geschlossenen Filterplattenpaket abgezogen werden, einer oder mehreren gesteuerten und nur horizontal gerichteten ruckartigen Bewegungskomponenten unterliegen, die allein von einer speziellen Steuerung des Antriebs der Verschiebevorrichtung ausgelöst werden.

2. Verfahren nach Anspruch 1,
**dadurch gekennzeichnet,**
**daß** die ruckartigen Bewegungen in einer Richtung vollzogen werden.

3. Verfahren nach Anspruch 1 oder 2,
**dadurch gekennzeichnet,**
**daß** die ruckartigen Bewegungen in Öffnungs- und in Schließrichtung des Filterplattenpakets verlaufen.

4. Verfahren nach einem der Ansprüche 1 - 3,
**dadurch gekennzeichnet,**
**daß** die ruckartigen Bewegungen periodisch erfolgen.

5. Verfahren nach einem der Ansprüche 1 - 4,
**dadurch gekennzeichnet,**
**daß** die ruckartigen Bewegungen in Intervallen erfolgen.

6. Anspruch nach einem der Ansprüche 1-5,
**dadurch gekennzeichnet,**
**daß** die ruckartigen Bewegungen von einem Umkehr-Schaltimpuls der Steuerung für die Filterplattenverschiebevorrichtung ausgelöst werden.

7. Verfahren nach einem der Ansprüche 1-6,
**dadurch gekennzeichnet,**
**daß** die ruckartigen Bewegungen durch Ein- und Ausschaltimpulse für die Filterplattentransportvorrichtung eingeleitet werden.

8. Verfahren nach einem der Ansprüche 1-7,
**dadurch gekennzeichnet,**
**daß** die ruckartigen Bewegungen über eine mit dem Antrieb der Filterplattenverschiebevorrichtung gekoppelte programmierbare Steuerung eingeleitet werden.

9. Verfahren nach einem der Ansprüche 1 - 8,
**dadurch gekennzeichnet,**
**daß** die mechanische Filterplattenbewegung von einer pneumatischen oder hydraulischen ruckartigen Bewegung überlagert wird.

## Claims

1. Procedure for the discharge of filter presses, consisting of several filter plates forming one filter plate pack, whereby the filter cakes which have been formed between the filter plates during a filtration cycle are removed from the filter chambers during the opening phase of the filter plate pack, in which the filter plates are pulled apart,
**characterized in that**
the filter plates, while they are pulled away from the closed filter plate pack, are subject to one or more controlled and only horizontally directed jerky movement components, which are solely released by a special controlling of the drive of the shifting device.

2. Procedure according to claim 1,
**characterized in that**
the jerky movements are carried out in one direction.

3. Procedure according to claim 1 or 2,
**characterized in that**
the jerky movements run in the opening and closing direction of the filter plate pack.

4. Procedure according to any one of claims 1 to 3,
**characterized in that**
the jerky movements take place periodically.

5. Procedure according to any one of claims 1 to 4,
**characterized in that**
the jerky movements take place in intervals.

6. Procedure according to any one of claims 1 to 5,
**characterized in that**
the jerky movements are released by a reversal switching pulse of the control for the filter plate shifting device.

7. Procedure according to any one of claims 1 to 6,
**characterized in that**
the jerky movements are started by connect and disconnect pulses for the filter plate shifting device.

8. Procedure according to any one of claims 1 to 7,
**characterized in that**
the jerky movements are started by a programmable control coupled with the drive of the filter plate shifting device.

9. Procedure according to any one of claims 1 to 8,
**characterized in that**
a pneumatic or hydraulic jerky movement overrides the mechanical filter plate movement.

## Revendications

1. Procédé pour le vidage de filtres-presses composés de plusieurs plateaux filtrants formant un paquet de plateaux où le gâteau formé entre les plateaux pendant la phase de filtration est éliminé des chambres des plateaux durant la phase d'ouverture du paquet de plateaux quand les plateaux sont séparés les uns des autres,
se distinguant en ce que
les plateaux, pendant qu'ils sont enlevés du paquet de plateaux fermé, sont soumis à une ou plusieurs composantes de mouvements saccadés commandés et dirigés uniquement à l'horizontale, qui sont déclenchés par une commande spéciale de l'entraînement du dispositif de transport des plateaux.

2. Procédé suivant revendication 1
se distinguant en ce que
les mouvements saccadés sont exécutés dans une seule direction.

3. Procédé suivant revendication 1 ou 2
se distinguant en ce que
les mouvements saccadés sont effectués en direction de l'ouverture et de la fermeture du paquet de plateaux.

4. Procédé suivant l'une des revendications 1-3
se distinguant en ce que
les mouvements saccadés ont lieu périodiquement.

5. Procédé suivant l'une des revendications 1-4
se distinguant en ce que
les mouvements saccadés ont lieu par intervalles.

6. Procédé suivant l'une des revendications 1-5
se distinguant en ce que
les mouvements saccadés sont déclenchés par une impulsion d'inversion de sens de la commande du dispositif de transport des plateaux.

7. Procédé suivant l'une des revendications 1-6
se distinguant en ce que
les mouvements saccadés sont générés par des impulsions de marche et d'arrêt du dispositif de transport des plateaux.

8. Procédé suivant l'une des revendications 1-7
se distinguant en ce que
les mouvements saccadés sont générés par une commande couplée au dispositif de transport des plateaux.

9. Procédé suivant l'une des revendications 1-8
se distinguant en ce que
un mouvement saccadé pneumatique ou hydraulique se superpose au déplacement mécanique des plateaux.
